# EUROPÄISCHE PATENTSCHRIFT

(11) **EP 1 596 093 B1**
(45) Veröffentlichungstag und Bekanntmachung des Hinweises auf die Patenterteilung: **06.08.2008**
(21) Anmeldenummer: 05003600.3
(22) Anmeldetag: 18.02.2005
(51) Int. Cl.: F16F 9/05

(54) **Luftfederanordnung**
Air spring assembly
Ensemble ressort pneumatique

(30) Priorität: 13.05.2004 DE 102004023561
(43) Veröffentlichungstag der Anmeldung: 16.11.2005
(73) Patentinhaber: Carl Freudenberg KG, 69465 Weinheim (DE)
(72) Erfinder: Harms, Ingo, 21075 Hamburg (DE); Weber, Michael, 21244 Buchholz (DE); Kobs, Peter, 22089 Hamburg (DE)

(56) Entgegenhaltungen:
- DE-A- 1 430 597
- DE-A1- 10 041 927
- DE-B- 1 245 656
- DE-U- 1 816 597

## Beschreibung

Die Erfindung betrifft eine Luftfederanordnung, bestehend wenigstens aus:
- einem Luftfederbalg aus elastomerem Werkstoff mit zwei Balgenden, der unter Bildung einer Schlaufe eine volumenelastische Luftkammer umschließt;
- einem Deckel mit einem ersten Anschlussbereich für das eine Balgende;
- einem Abrollkolben, der einen zweiten Anschlussbereich für das andere Balgende und ferner eine Abrollfläche für die Schlaufe aufweist; sowie
- einer Schutzmanschette für den Luftfederbalg.

Eine gattungsgemäße Luftfederanordnung findet im Fahrzeugbau, insbesondere auf dem PKW-Sektor, eine breite Anwendung, wobei insbesondere auf die Druckschriften DE 18 16 597 U1, DE 102 25 986 A1 und DE 14 30 597 A verwiesen wird.

Neben den oben genannten Grundbauteilen kann die Luftfederanordnung noch mit einem Schwingungsdämpfer (Stoßdämpfer) ausgestattet sein. Eine derartige Luftfederanordnung wird auch als Luftfederbein bezeichnet. Hinsichtlich des diesbezüglichen Standes der Technik wird insbesondere auf die Druckschrift DE 197 53 637 A1 verwiesen.

Im Rahmen einer Weiterentwicklung besteht die Aufgabe der Erfindung darin, im Bereich des Deckels den Anbindungssektor von Luftfederbalg und Schutzmanschette so zu gestalten, dass bei vorhandenem Bauraum ein kostengünstiges wie auch sicheres Zusammenfügen der Anbindungsbauteile gewährleistet ist.

Gelöst wird diese Aufgabe durch die Merkmale des Patentanspruches 1.

Zweckmäßige Ausgestaltungen der Erfindung sind in den Patentansprüchen 2 bis 17 genannt.

Die Erfindung wird nun anhand von Ausführungsbeispielen unter Bezugnahme auf schematische Zeichnungen erläutert. Es zeigen:
- Fig. 1: den näheren Bereich des Deckels;
- Fig. 2: den Verlauf der Schutzmanschette von Deckel zum Abrollkolben;
- Fig. 3: einen Spannring mit Formschließverbindung;
- Fig. 4: einen Spannring mit geschweißter Verbindung;
- Fig. 5: einen Spannring mit Schellenverbindung;
- Fig. 6: einen Spannring mit Nietverbindung;
- Fig. 7: einen Spannring mit einem verformbaren Verbindungsüberhang.

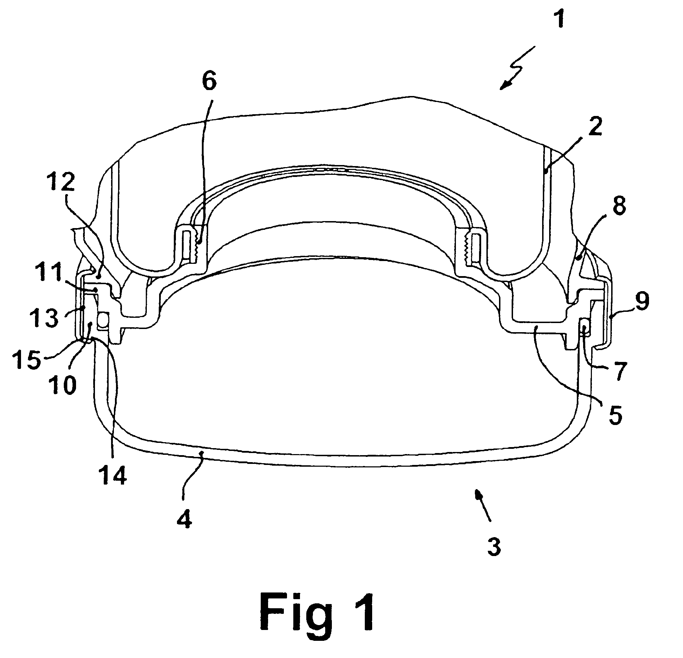

Fig. 1 zeigt eine Luftfederanordnung 1 mit einem Luftfederbalg 2 und Deckel 3. Der Luftfederbalg aus elastomerem Werkstoff ist zumeist mit einem eingebetteten Festigkeitsträger versehen, hier insbesondere in Form eines Kreuzlagenbalges (DE 29 04 522 A1).

Der Deckel **3**, der insbesondere als Druckbehälter ausgebildet ist, umfasst ein topfförmiges Basisbauteil **4** und ein separates Anschlussbauteil **5** mit dem ersten Anschlussbereich **6** für das eine Balgende, wobei das Basisbaubeil und das Anschlussbauteil in einem direkten Kontakt zueinander stehen. Zwischen dem Basisbauteil und dem Anschlussbauteil ist ein Dichtring **7** aus polymerem Werkstoff angeordnet. Dieser Dichtring besteht insbesondere aus einem elastomeren Werkstoff oder einem thermoplastischen Elastomer (TPE).

Das Anschlussbauteil **5** ist hier einteilig (einstückig) ausgebildet. Auch eine mehrteilige Ausbildung, insbesondere unter Integration eines Elastomerlagers, ist möglich.

Ferner ist im Bereich des Deckels **3** ein Schutzmanschettenhalter **8** als ebenfalls separates Bauteil vorhanden, das mit dem Anschlussbauteil **5** in direkter Verbindung steht.

Ein gemeinsamer Spannring **9** aus Metall hält das Basisbauteil **4,** das Anschlussbauteil **5** und den Schutzmanschettenhalter **6** außenseitig unter Abdichtung zusammen. Das Basisbauteil, das Anschlussbauteil und der Schutzmanschettenhalter besitzen im Bereich des Spannringes flanschförmige Ausläufer **10, 11** und **12,** die zur Spannringinnenseite hin eine fluchtend verlaufende gemeinsame Außenfläche **13** aufweisen. Außerdem besitzen das Basisbauteil und der Schutzmanschettenhalter jeweils einen Hinterschnitt **14,** wobei Krallen **15** des Spannringes den jeweiligen Hinterschnitt umgreifen.

Das Basisbauteil **4** und/oder das Anschlussbauteil **5** und/oder der Schutzmanschettenhalter **8,** insbesondere alle diese drei Bauteile, bestehen aus Kunststoff. Der Kunststoff ist ein Polymer mit hoher Schlagzähigkeit, vorzugsweise auf der Basis eines Polyamids oder Polyesters. Ferner kann der Kunststoff verstärkt sein, wobei insbesondere die Gewebe- oder Faserverstärkung (Glasfaserverstärkung) zu nennen ist.

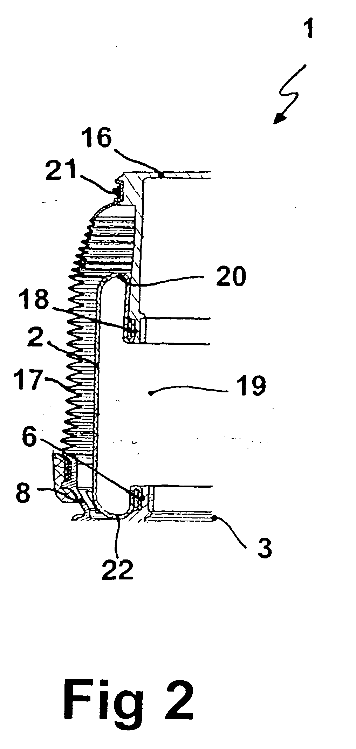

Die Fig. 2 zeigt die Luftfederanordnung **1** mit den wesentlichen gattungsgemäßen Grundbauteilen, nämlich Luftfederbalg **2,** Deckel **3,** Abrollkolben **16** und Schutzmanschette **17.** Die beiden Balgenden sind innerhalb der beiden Anschlussbereiche **6** und **18** an den Deckel bzw. Abrollkolben befestigt, insbesondere mittels Klemmringen. Dadurch wird eine volumenelastische Luftkammer **19** gebildet. Bei der Einfederung entsteht eine Schlaufe **20** (dynamischer Bereich des Luftfederbalges), die an der Abrollfläche entlang gleiten kann. Im Bereich des Deckels **3** ist eine zweite Schlaufe **22** ausgebildet, die gegenüber der Schlaufe **20** nur begrenzt abrollen kann. Hinsichtlich der Doppelschlaufenkonstruktion wird insbesondere auf die Druckschriften EP 1 015 790 B1 und DE 101 03 493 A1 verwiesen. Auch eine schlaufenfreie Konstruktion im Bereich des Deckels ist möglich.

Die Schutzmanschette **17,** die zumeist aus einem polymeren Werkstoff (Elastomer, Thermoplast, TPE) besteht, verläuft vom Schutzmanschettenhalter **8** im Bereich des Deckels **3** bis zum Endbereich **21** des Abrollkolbens **16,** wobei die Befestigung des jeweiligen Manschettenrandes beispielsweise mittels Klemmringen erfolgt.

Eines der Grundbauteile, nämlich Deckel **3** oder Abrollkolben **16,** ist ortsfest an der Karosserie befestigt. Das andere Bauteil ist fest mit dem Lenker der Achse (Fahrwerksanbindung) verbunden. Bei dem Ausführungsbeispiel gemäß Fig. 1 und 2 ist der Deckel als unteres Bauteil mit dem Lenker der Achse verbunden, während der Abrollkolben als oberes Bauteil mit der Karosserie in Verbindung steht.

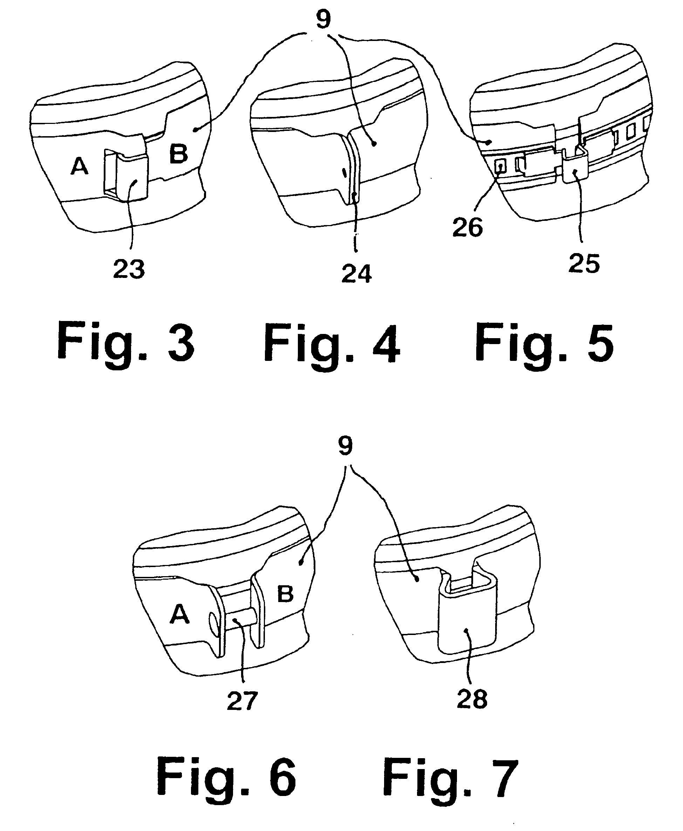

Die Fig. 3 bis 7 halten vorteilhafte Verbindungsvarianten des Spannringes **9** an seinen beiden Enden A und B fest, wobei auf die Kurzfassung der Figurenbeschreibung wie auch auf die Bezugszeichenliste verwiesen wird.

### Bezugszeichenliste

- **1**: Luftfederanordnung
- **2**: Luftfederbalg
- **3**: Deckel (Druckbehälter)
- **4**: topförmiges Basisbauteil des Deckels
- **5**: Anschlussbauteil des Deckels
- **6**: erster Anschlussbereich
- **7**: Dichtring
- **8**: Schutzmanschettenhalter
- **9**: Spannring mit den Enden A und B
- **10**: flanschförmiger Ausläufer des Basisbauteiles
- **11**: flanschförmiger Ausläufer des Anschlussbauteiles
- **12**: flanschförmiger Ausläufer des Schutzmanschettenhalters
- **13**: gemeinsame Außenfläche der flanschförmigen Ausläufer
- **14**: Hinterschnitt
- **15**: Krallen des Spannringes
- **16**: Abrollkolben (Tauchkolben)
- **17**: Schutzmanschette
- **18**: zweiter Anschlussbereich
- **19**: volumenelastische Luftkammer
- **20**: Schlaufe (Rollfalte)
- **21**: Endbereich des Abrollkolbens
- **22**: zweite Schlaufe
- **23**: Formschließverbindung
- **24**: geschweißte Verbindung
- **25**: Schellenverbindung
- **26**: Einrastöffnungen
- **27**: Nietverbindung
- **28**: verformbarer Verbindungsüberhang

## Patentansprüche

1. Luftfederanordnung (1), bestehend aus:
- einem Luftfederbalg (2) aus elastomerem Werkstoff mit zwei Balgenden, der unter Bildung einer Schlaufe (20) eine volumenelastische Luftkammer (19) umschließt;
- einem Topf (3) mit einem ersten Anschlussbereich (6) für das eine Balgende;
- einem Abrollkolben (16) mit einem zweiten Anschlussbereich (18) für das andere Balgende und einer Abrollfläche für die Schlaufe (20) sowie
- einer Schutzmanschette (17) für den Luftfederbalg (2);
**dadurch gekennzeichnet, dass**
- der Topf (3) ein deckelförmiges Basisbauteil (4) und ein separates Anschlussbauteil (5) für den ersten Anschlussbereich (6) hat, an dem das eine Balgende durch einen Klemmring befestigt ist, wobei das Basisbauteil (4) und das Anschlussbauteil (5) in direktem Kontakt zueinander stehen;
- im Bereich des Topfes (3) ein Schutzmanschettenhalter (8) als ebenfalls separates Bauteil vorhanden ist, das mit dem Anschlussbauteil (5) in direkter Verbindung steht an dem der Manschettenrand befestigt ist;
- und das Basisbauteil (4), das Anschlussbauteil (5) und der Schutzmanschettenhalter (8) außenseitig unter Abdichtung durch einen gemeinsamen Spannring (9) zusammengehalten werden, dessen beide Enden (A, B) mittels einer Verbindung (23, 24, 25, 27, 28) zusammengefügt sind.

2. Luftfederanordnung nach Anspruch 1, **dadurch gekennzeichnet, dass** das Basisbauteil (4) und/oder das Anschlussbauteil (5) und/oder der Schutzmanschettenhalter (8) aus Kunststoff bestehen.

3. Luftfederanordnung nach Anspruch 2, **dadurch gekennzeichnet, dass** der Kunststoff ein Polymer mit hoher Schlagzähigkeit auf der Basis eines Polyamids oder Polyesters ist.

4. Luftfederanordnung nach Anspruch 2 oder 3, **dadurch gekennzeichnet, dass** der Kunststoff gewebe- oder faserverstärkt ist.

5. Luftfederanordnung nach Anspruch 4, **dadurch gekennzeichnet, dass** der Kunststoff glasfaserverstärkt ist.

6. Luftfederanordnung nach einem der Ansprüche 1 bis 5, **dadurch gekennzeichnet, dass** das Basisbauteil (4), das Anschlussbauteil (5) und der Schutzmanschettenhalter (8) im Bereich des Spannringes (9) flanschförmige Ausläufer (10, 11, 12) besitzen, die zur Spannringinnenseite hin eine fluchtend verlaufende gemeinsame Außenfläche (13) aufweisen.

7. Luftfederanordnung nach einem der Ansprüche 1 bis 6, **dadurch gekennzeichnet, dass** das Basisbauteil (4) und der Schutzmanschettehalter (8) jeweils einen Hinterschnitt (14) aufweisen, wobei Krallen (15) des Spannringes (9) den jeweiligen Hinterschnitt umgreifen.

8. Luftfederanordnung nach einem der Ansprüche 1 bis 7, **dadurch gekennzeichnet, dass** zwischen dem Basisbauteil (4) und dem Anschlussbauteil (5) ein Dichtring (7) aus polymerem Werkstoff angeordnet ist.

9. Luftfederanordnung nach Anspruch 8, **dadurch gekennzeichnet, dass** der Dichtring (7) aus elastomerem Werkstoff oder einem thermoplastischen Elastomer besteht.

10. Luftfederanordnung nach einem der Ansprüche 1 bis 9, **dadurch gekennzeichnet, dass** die Enden (A, B) des Spannringes (9) mittels einer Formschließverbindung (23) zusammengefügt sind.

11. Luftfederanordnung nach einem der Ansprüche 1 bis 9, **dadurch gekennzeichnet, dass** die beiden Enden (A, B) des Spannringes (9) mittels einer geschweißten Verbindung (24) zusammengefügt sind.

12. Luftfederanordnung nach einem der Ansprüche 1 bis 9, **dadurch gekennzeichnet, dass** die Enden (A, B) des Spannringes (9) mittels einer Schellenverbindung (25) zusammengefügt sind, wobei das jeweilige krallenförmige Schellende in Öffnungen (26) einrastet, die in Reihe geschaltet sind.

13. Luftfederanordnung nach einem der Ansprüche 1 bis 9, **dadurch gekennzeichnet, dass** die Enden (A, B) des Spannringes (9) mittels einer Nietverbindung (27) zusammengefügt sind.

14. Luftfederanordnung nach einem der Ansprüche 1 bis 9, **dadurch gekennzeichnet, dass** die Enden (A, B) des Spannringes-(9) über einen verformbaren endlos geschlossenen Verbindungsüberhang (28) zusammengefügt sind.

15. Luftfederanordnung nach Anspruch 14, **dadurch gekennzeichnet, dass** der Verbindungsüberhang (28) gebogen ist.

16. Luftfederanordnung nach einem der Ansprüche 1 bis 15, **dadurch gekennzeichnet, dass** der Spannring (9) aus Metall besteht.

17. Luftfederanordnung nach einem der Ansprüche 1 bis 16, **dadurch gekennzeichnet, dass** das Anschlussbauteil (5) mit dem ersten Anschlussbereich (6) einteilig oder mehrteilig unter Integration eines Elastomerlager ausgebildet ist.

## Claims

1. Air spring assembly (1), composed of:
- an air spring bellows (2) composed of elastomeric material with two bellows ends, which air spring bellows (2) surrounds an air chamber (19), which is elastic in terms of volume, so as to form a loop (20);
- a pot (3) with a first connecting region (6) for the one bellows end;
- a rolling piston (16) with a second connecting region (18) for the other bellows end and with a rolling surface for the loop (20), and
- a protective sleeve (17) for the air spring bellows (2);
**characterized in that**
- the pot (3) has a cover-like base component (4) and a separate connecting component (5) for the first connecting region (6), to which connecting component (5) the one bellows end is fastened by means of a clamping ring, with the base component (4) and the connecting component (5) being in direct contact with one another;
- in the region of the pot (3), a protective sleeve holder (8) is provided as a likewise separate component which is directly connected to the connecting component (5) to which the sleeve edge is fastened;
- and the base component (4), the connecting component (5) and the protective sleeve holder (8) are held together at the outside with a sealing action by means of a common clamping ring (9) whose two ends (A, B) are joined together by means of a connection (23, 24, 25, 27, 28).

2. Air spring assembly according to Claim 1, **characterized in that** the base component (4) and/or the connecting component (5) and/or the protective sleeve holder (8) are composed of plastic.

3. Air spring assembly according to Claim 2, **characterized in that** the plastic is a polymer with a high impact strength, on the basis of a polyamide or polyester.

4. Air spring assembly according to Claim 2 or 3, **characterized in that** the plastic is fabric-reinforced or fibre-reinforced.

5. Air spring assembly according to Claim 4, **characterized in that** the plastic is glass-fibre-reinforced.

6. Air spring assembly according to one of Claims 1 to 5, **characterized in that**, in the region of the clamping ring (9), the base component (4), the connecting component (5) and the protective sleeve holder (8) have flange-like extensions (10, 11, 12) which have a common outer surface (13) which runs in an aligned fashion in the direction of the clamping ring inner side.

7. Air spring assembly according to one of Claims 1 to 6, **characterized in that** the base component (4) and the protective sleeve holder (8) have in each case one undercut (14), with claws (15) of the clamping ring (9) engaging around the respective undercut.

8. Air spring assembly according to one of Claims 1 to 7, **characterized in that** a sealing ring (7) composed of polymeric material is arranged between the base component (4) and the connecting component (5).

9. Air spring assembly according to Claim 8, **characterized in that** the sealing ring (7) is composed of elastomeric material or a thermoplastic elastomer.

10. Air spring assembly according to one of Claims 1 to 9, **characterized in that** the ends (A, B) of the clamping ring (9) are joined together by means of a form-fitting connection (23).

11. Air spring assembly according to one of Claims 1 to 9, **characterized in that** the two ends (A, B) of the clamping ring (9) are joined together by means of a welded connection (24).

12. Air spring assembly according to one of Claims 1 to 9, **characterized in that** the ends (A, B) of the clamping ring (9) are joined together by means of a clip connection (25), with the respective claw-like clip end latching into openings (26) which are positioned in a row.

13. Air spring assembly according to one of Claims 1 to 9, **characterized in that** the ends (A, B) of the clamping ring (9) are joined together by means of a rivet connection (27).

14. Air spring assembly according to one of Claims 1 to 9, **characterized in that** the ends (A, B) of the clamping ring (9) are joined together by means of a deformable endless, closed connecting overhang (28).

15. Air spring assembly according to Claim 14, **characterized in that** the connecting overhang (28) is bent.

16. Air spring assembly according to one of Claims 1 to 15, **characterized in that** the clamping ring (9) is composed of metal.

17. Air spring assembly according to one of Claims 1 to 16, **characterized in that** the connecting component (5) is formed in a unipartite fashion with the first connecting region (6) or in a multipartite fashion with the first connecting region (6) with the integration of an elastomer mount.

## Revendications

1. Dispositif de ressort pneumatique (1) composé :
- d'un soufflet de suspension (2) composé de matériau élastomère pourvu de deux extrémités de soufflet et qui, en formant une boucle (20), entoure une chambre à air à volume élastique (19) ;
- d'une cuvette (3) dotée d'une première zone de raccordement (6) pour une extrémité de soufflet ;
- d'un piston de roulement (16) doté d'une deuxième zone de raccordement (18) pour l'autre extrémité de soufflet et d'une surface de roulement pour la boucle (20) ainsi que
- d'un manchon protecteur (17) pour le soufflet de suspension (2) ;
**caractérisé en ce que**
- la cuvette (3) possède un élément de base (4) et un élément de raccordement séparé (5) pour la première zone de raccordement (6) à laquelle une extrémité de soufflet est fixée par une bague de serrage, l'élément de base (4) et l'élément de raccordement (5) étant en contact direct l'un avec l'autre ;
- au niveau de la cuvette (3) se trouve un support de manchon protecteur (8) sous forme d'élément également séparé qui est en liaison directe avec l'élément de raccordement (5) auquel le bord du manchon est fixé ;
- et **en ce que** l'élément de base (4), l'élément de raccordement (5) et le support de manchon protecteur (8) sont maintenus ensemble par l'extérieur de manière étanche par une bague de serrage commune (9) dont les deux extrémités (A, B) sont assemblées au moyen d'un raccord (23, 24, 25, 27, 28).

2. Dispositif de ressort pneumatique selon la revendication 1, **caractérisé en ce que** l'élément de base (4) et/ou l'élément de raccordement (5) et/ou le support de manchon protecteur (8) sont composés de matière plastique.

3. Dispositif de ressort pneumatique selon la revendication 2, **caractérisé en ce que** la matière plastique est un polymère à grande résilience à base de polyamide ou de polyester.

4. Dispositif de ressort pneumatique selon la revendication 2 ou 3, **caractérisé en ce que** la matière plastique est renforcée par de la toile ou des fibres.

5. Dispositif de ressort pneumatique selon la revendication 4, **caractérisé en ce que** la matière plastique est renforcée par des fibres de verre.

6. Dispositif de ressort pneumatique selon l'une quelconque des revendications 1 à 5, **caractérisé en ce que** l'élément de base (4), l'élément de raccordement (5) et le support de manchon protecteur (8) comportent au niveau de la bague de serrage (9) des extensions en forme de brides (10, 11, 12) qui présentent une surface extérieure commune (13) s'étendant en direction de l'intérieur de la bague de serrage.

7. Dispositif de ressort pneumatique selon l'une quelconque des revendications 1 à 6, **caractérisé en ce que** l'élément de base (4) et le support de manchon protecteur (8) présentent respectivement une dépouille (14), des griffes (15) de la bague de serrage (9) entourant la dépouille respective.

8. Dispositif de ressort pneumatique selon l'une quelconque des revendications 1 à 7, **caractérisé en ce que**, entre l'élément de base (4) et l'élément de raccordement (5), une bague d'étanchéité (7) en matériau polymère est disposée.

9. Dispositif de ressort pneumatique selon la revendication 8, **caractérisé en ce que** la bague d'étanchéité (7) est composée de matériau polymère ou d'élastomère thermoplastique.

10. Dispositif de ressort pneumatique selon l'une quelconque des revendications 1 à 9, **caractérisé en ce que** les extrémités (A, B) de la bague de serrage (9) sont assemblées au moyen d'un raccord à correspondance géométrique (23).

11. Dispositif de ressort pneumatique selon l'une quelconque des revendications 1 à 9, **caractérisé en ce que** les extrémités (A, B) de la bague de serrage (9) sont assemblées au moyen d'un raccord soudé (24).

12. Dispositif de ressort pneumatique selon l'une quelconque des revendications 1 à 9, **caractérisé en ce que** les extrémités (A, B) de la bague de serrage (9) sont assemblées au moyen d'un raccord à collier (25), l'extrémité en forme de griffe respective du collier s'engrenant dans des orifices (26) qui sont pratiqués en série.

13. Dispositif de ressort pneumatique selon l'une quelconque des revendications 1 à 9, **caractérisé en ce que** les extrémités (A, B) de la bague de serrage (9) sont assemblées au moyen d'un raccord riveté (27).

14. Dispositif de ressort pneumatique selon l'une quelconque des revendications 1 à 9, **caractérisé en ce que** les extrémités (A, B) de la bague de serrage (9) sont assemblées par un raccord en surplomb (28) déformable et fermé en continu.

15. Dispositif de ressort pneumatique selon la revendication 14, **caractérisé en ce que** le raccord en surplomb (28) est courbé.

16. Dispositif de ressort pneumatique selon l'une quelconque des revendications 1 à 15, **caractérisé en ce que** la bague de serrage (9) est composée de métal.

17. Dispositif de ressort pneumatique selon l'une quelconque des revendications 1 à 16, **caractérisé en ce que** l'élément de raccordement (5) est réalisé en une pièce avec la première zone de raccordement (6) ou en plusieurs pièces avec intégration d'un palier en élastomère.
